# EUROPÄISCHE PATENTSCHRIFT

(11) **EP 2 089 151 B1**
(45) Veröffentlichungstag und Bekanntmachung des Hinweises auf die Patenterteilung: **25.05.2016**
(21) Anmeldenummer: 07821986.2
(22) Anmeldetag: 29.10.2007
(51) Int. Cl.: B01J 19/00, C08F 2/01, C08F 2/10, C08F 220/06, C08F 2/00, C08F 2/16, C08F 2/34

(54) **REGELUNG EINES VERFAHRENS ZUR HERSTELLUNG WASSERABSORBIERENDER POLYMERPARTIKEL IN EINER ERWÄRMTEN GASPHASE**
REGULATION OF A PROCESS FOR PRODUCING WATER-ABSORBING POLYMER PARTICLES IN A HEATED GAS PHASE
CONTRÔLE D'UN PROCÉDÉ DE FABRICATION DE PARTICULES POLYMÈRES ABSORBANT L'EAU DANS UNE PHASE GAZEUSE CHAUFFÉE

(30) Priorität: 31.10.2006 EP 06123266
(43) Veröffentlichungstag der Anmeldung: 19.08.2009
(73) Patentinhaber: BASF SE, 67056 Ludwigshafen am Rhein (DE)
(72) Erfinder: LÖSCH, Dennis, 67122 Altrip (DE); KRÜGER, Marco, 68161 Mannheim (DE); WEISMANTEL, Matthias, 63637 Jossgrund (DE); HEIDE, Wilfried, 67251 Freinsheim (DE)
(74) Vertreter: BASF IP Association
(86) Internationale Anmeldenummer: PCT/EP2007/061632
(87) Internationale Veröffentlichungsnummer: WO 2008/052971

(56) Entgegenhaltungen:
- WO-A-2006/079631
- WO-A-2007/093531
- US-A1- 2002 193 546

## Beschreibung

Die vorliegende Erfindung betrifft ein Verfahren zur Herstellung wasserabsorbierender Polymerpartikel, wobei Monomere enthaltende Tropfen erzeugt werden, die Monomeren in einer die Tropfen umgebenden erwärmten Gasphase polymerisiert werden, das Gas den Polymerisationsreaktor durchströmt und die Temperatur des den Polymerisationsreaktor verlassenden Gases geregelt wird.

Die Herstellung wasserabsorbierender Polymerpartikel wird in der Monographie "Modern Superabsorbent Polymer Technology", F.L. Buchholz und A.T. Graham, Wiley-VCH, 1998, Seiten 71 bis 103, beschrieben.

Wasserabsorbierende Polymere werden als wässrige Lösungen absorbierende Produkte zur Herstellung von Windeln, Tampons, Damenbinden und anderen Hygieneartikeln, aber auch als wasserzurückhaltende Mittel im landwirtschaftlichen Gartenbau verwendet.

Durch Sprühpolymerisation konnten die Verfahrensschritte Polymerisation und Trocknung zusammengefasst werden. Zusätzlich konnte die Partikelgröße durch geeignete Verfahrensführung in gewissen Grenzen eingestellt werden.

Die Herstellung wasserabsorbierender Polymerpartikel durch Polymerisation von Tropfen einer Monomerlösung wird beispielsweise in EP 348 180 A1, WO 96/40427 A1, US 5,269,980, DE 103 14 466 A1, DE 103 40 253 A1 und DE 10 2004 024 437 A1, WO 2006/077054 A1 sowie DE 10 2006 001 596 A1, WO2007/093531 A1 und WO 2006/102232 A2 beschrieben.

US 2002/0193546 beschreibt ein Verfahren zur Sprühpolymerisation in einer nahezu statischen Atmosphäre.

WO 2006/079631 A1 offenbart ein Verfahren zur Herstellung wasserabsorbierender Polymerpartikel, wobei Tropfen einer Monomerlösung polymerisiert und die erhaltenen Polymerpartikel in einem Wirbelbett getrocknet werden.

WO 2007/093531 A1 lehrt die Polymerisation von Tropfen einer Monomerlösung in Gegenwart von wenig Sauerstoff.

Aufgabe der vorliegenden Erfindung war die Bereitstellung eines verbesserten Verfahrens zur Herstellung wasserabsorbierender Polymerpartikel durch Polymerisation von Tropfen einer Monomerlösung in einer die Tropfen umgebenden Gasphase.

Insbesondere war es eine Aufgabe der vorliegenden Erfindung ein Verfahren bereitzustellen, das wenig störanfällig ist und gleichzeitig qualitativ hochwertige Produkte erzeugt.

Gelöst wurde die Aufgabe durch ein Verfahren zur Herstellung wasserabsorbierender Polymerpartikel, wobei Monomere enthaltende Tropfen erzeugt werden, die Monomeren in einer die Tropfen umgebenden erwärmten Gasphase polymerisiert werden und das Gas den Polymerisationsreaktor durchströmt, dadurch gekennzeichnet, dass die Temperatur des den Polymerisationsreaktor verlassenden Gases geregelt wird.

Die Temperatur des den Polymerisationsreaktor verlassenden Gases wird über die Heizleistung geregelt und das den Reaktor durchströmende Gas wird vor dem Eintritt in den Reaktor mittels geeigneter Wärmeaustauscher entsprechend vorgewärmt.

Bei einer Regelung wird die zu regelnde Größe, die Regelgröße (Istwert) fortlaufend erfasst und mit einer anderen Größe, der Führungsgröße (Sollwert) verglichen. Abhängig vom Ergebnis des Vergleichs zwischen beiden Größen im Regler wird dann, mittels der aus dem Vergleich resultierenden Stellgröße, die Angleichung der Regelgröße an die Führungsgröße herbeigeführt. In der vorliegenden Erfindung ist die Gasausgangstemperatur die Regelgröße und beispielsweise die Heizleistung die Stellgröße.

### Die erzeugten Tropfen enthalten

a) mindestens ein ethylenisch ungesättigtes Monomer,
b) mindestens einen Vernetzer,
c) mindestens einen Initiator und
d) Wasser.

Die Monomeren a) sind vorzugsweise wasserlöslich, d.h. die Löslichkeit in Wasser bei 23°C beträgt typischerweise mindestens 1 g/100 g Wasser, vorzugsweise mindestens 5 g/100 g Wasser, besonders bevorzugt mindestens 25 g/100 g Wasser, ganz besonders bevorzugt mindestens 50 g/100 g Wasser, und haben vorzugsweise mindestens je eine Säuregruppe.

Geeignete Monomere a) sind beispielsweise ethylenisch ungesättigte Carbonsäuren, wie Acrylsäure, Methacrylsäure, Maleinsäure, Fumarsäure und Itaconsäure. Besonders bevorzugte Monomere sind Acrylsäure und Methacrylsäure. Ganz besonders bevorzugt ist Acrylsäure.

Die bevorzugten Monomere a) haben mindestens eine Säuregruppe, wobei die Säuregruppen vorzugsweise zumindest teilweise neutralisiert sind.

Der Anteil an Acrylsäure und/oder deren Salzen an der Gesamtmenge der Monomeren a) beträgt vorzugsweise mindestens 50 mol-%, besonders bevorzugt mindestens 90 mol-%, ganz besonders bevorzugt mindestens 95 mol-%.

Die Säuregruppen der Monomere a) sind üblicherweise teilweise neutralisiert, vorzugsweise zu 25 bis 85 mol-%, bevorzugt zu 50 bis 80 mol-%, besonders bevorzugt 60 bis 75 mol-%, wobei die üblichen Neutralisationsmittel verwendet werden können, vorzugsweise Alkalimetallhydroxide, Alkalimetalloxide, Alkalimetallcarbonate oder Alkalimetallhydrogencarbonate sowie deren Mischungen. Statt Alkalimetallsalzen können auch Ammoniumsalze verwendet werden. Natrium und Kalium sind als Alkalimetalle besonders bevorzugt, ganz besonders bevorzugt sind jedoch Natriumhydroxid, Natriumcarbonat oder Natriumhydrogencarbonat sowie deren Mischungen. Üblicherweise wird die Neutralisation durch Einmischung des Neutralisationsmittels als wässrige Lösung, als Schmelze, oder bevorzugt auch als Feststoff erreicht. Beispielsweise kann Natriumhydroxid mit einem Wasseranteil deutlich unter 50 Gew.-% als wachsartige Masse mit einem Schmelzpunkt oberhalb 23°C vorliegen. In diesem Fall ist eine Dosierung als Stückgut oder Schmelze bei erhöhter Temperatur möglich.

Die Monomere a), insbesondere Acrylsäure, enthalten vorzugsweise bis zu 0,025 Gew.-% eines Hydrochinonhalbethers. Bevorzugte Hydrochinonhalbether sind Hydrochinonmonomethylether (MEHQ) und/oder Tocopherole.

Unter Tocopherol werden Verbindungen der folgenden Formel verstanden 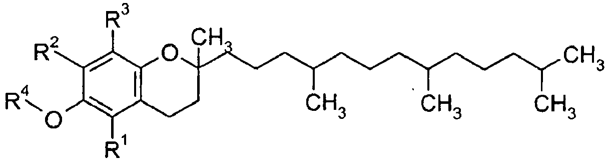 wobei R¹ Wasserstoff oder Methyl, R² Wasserstoff oder Methyl, R³ Wasserstoff oder Methyl und R⁴ Wasserstoff oder ein Säurerest mit 1 bis 20 Kohlenstoffatomen bedeutet.

Bevorzugte Reste für R⁴ sind Acetyl, Ascorbyl, Succinyl, Nicotinyl und andere physiologisch verträgliche Carbonsäuren. Die Carbonsäuren können Mono-, Di- oder Tricarbonsäuren sein.

Bevorzugt ist alpha-Tocopherol mit R¹ = R² = R³ = Methyl, insbesondere racemisches alpha-Tocopherol. R¹ ist besonders bevorzugt Wasserstoff oder Acetyl. Insbesondere bevorzugt ist RRR-alpha-Tocopherol.

Die Monomerlösung enthält vorzugsweise höchstens 160 Gew.-ppm, bevorzugt höchstens 130 Gew.-ppm, besonders bevorzugt,höchstens 70 Gew.-ppm, bevorzugt mindesten 10 Gew.-ppm, besonders bevorzugt mindesten 30 Gew.-ppm, insbesondere um 50 Gew.-ppm, Hydrochinonhalbether, jeweils bezogen auf Acrylsäure, wobei Acrylsäuresalze als Acrylsäure mit berücksichtigt werden. Beispielsweise kann zur Herstellung der Monomerlösung eine Acrylsäure mit einem entsprechenden Gehalt an Hydrochinonhalbether verwendet werden.

Vernetzer b) sind Verbindungen mit mindestens zwei polymerisierbaren Gruppen, die in das Polymernetzwerk radikalisch einpolymerisiert werden können. Geeignete Vernetzer b) sind beispielsweise Ethylenglykoldimethacrylat, Diethylenglykoldiacrylat, Allylmethacrylat, Trimethylolpropantriacrylat, Triallylamin, Tetraallyloxyethan, wie in EP 530 438 A1 beschrieben, Di- und Triacrylate, wie in EP 547 847 A1, EP 559 476 A1, EP 632 068 A1, WO 93/21237 A1, WO 2003/104299 A1, WO 2003/104300 A1, WO 2003/104301 A1 und DE 103 31 450 A1 beschrieben, gemischte Acrylate, die neben Acrylatgruppen weitere ethylenisch ungesättigte Gruppen enthalten, wie in DE 103 31 456 A1 und DE 103 55 401 A1 beschrieben, oder Vernetzermischungen, wie beispielsweise in DE 195 43 368 A1, DE 196 46 484 A1, WO 90/15830 A1 und WO 2002/32962 A2 beschrieben.

Geeignete Vernetzer b) sind insbesondere N,N'-Methylenbisacrylamid und N,N'-Methylenbismethacrylamid, Ester ungesättigter Mono- oder Polycarbonsäuren von Polyolen, wie Diacrylat oder Triacrylat, beispielsweise Butandiol- oder Ethylenglykoldiacrylat bzw. -methacrylat sowie Trimethylolpropantriacrylat und Allylverbindungen, wie Allyl(meth)acrylat, Triallylcyanurat, Maleinsäurediallylester, Polyallylester, Tetraallyloxyethan, Triallylamin, Tetraallylethylendiamin, Allylester der Phosphorsäure sowie Vinylphosphonsäurederivate, wie sie beispielsweise in EP 343 427 A2 beschrieben sind. Weiterhin geeignete Vernetzer b) sind Pentaerythritoldi-, Pentaerythritoltri- und Pentaerythritoltetraallylether, Polyethylenglykoldiallylether, Ethylenglykoldiallylether, Glyzerindi- und Glyzerintriallylether, Polyallylether auf Basis Sorbitol, sowie ethoxylierte Varianten davon. Im erfindungsgemäßen Verfahren einsetzbar sind Di(meth)acrylate von Polyethylenglykolen, wobei das eingesetzte Polyethylenglykol ein Molekulargewicht zwischen 300 und 1000 aufweist.

Besonders vorteilhafte Vernetzer b) sind jedoch Di- und Triacrylate des 3- bis 20-fach ethoxylierten Glyzerins, des 3- bis 20-fach ethoxylierten Trimethylolpropans, des 3- bis 20-fach ethoxylierten Trimethylolethans, insbesondere Di- und Triacrylate des 2- bis 6-fach ethoxylierten Glyzerins oder Trimethylolpropans, des 3-fach propoxylierten Glyzerins oder Trimethylolpropans, sowie des 3-fach gemischt ethoxylierten oder propoxylierten Glyzerins oder Trimethylolpropans, des 15-fach ethoxylierten Glyzerins oder Trimethylolpropans, sowie des mindestens 40-fach ethoxylierten Glyzerins, Trimethylolethans oder Trimethylolpropans.

Ganz besonders bevorzugte Vernetzer b) sind die mit Acrylsäure oder Methacrylsäure zu Di- oder Triacrylaten veresterten mehrfach ethoxylierten und/oder propoxylierten Glyzerine, wie sie beispielsweise in WO 2003/104301 A1 beschrieben sind. Besonders vorteilhaft sind Di- und/oder Triacrylate des 3- bis 10-fach ethoxylierten Glyzerins. Ganz besonders bevorzugt sind Di- oder Triacrylate des 1- bis 5-fach ethoxylierten und/oder propoxylierten Glyzerins. Am meisten bevorzugt sind die Triacrylate des 3-bis 5-fach ethoxylierten und/oder propoxylierten Glyzerins.

Die Monomerlösung enthält vorzugsweise mindestens 0,2 Gew.-%, bevorzugt mindestens 0,4 Gew.-%, besonders bevorzugt mindestens 0,6 Gew.-%, ganz besonders bevorzugt mindestens 0,8 Gew.-%, Vernetzer b), jeweils bezogen auf Monomer a).

Als Initiatoren c) können sämtliche unter den Polymerisationsbedingungen in Radikale zerfallende Verbindungen eingesetzt werden, beispielsweise Peroxide, Hydroperoxide, Wasserstoffperoxid, Persulfate, Azoverbindungen und die sogenannten Redoxinitiatoren. Bevorzugt ist der Einsatz von wasserlöslichen Initiatoren. In manchen Fällen ist es vorteilhaft, Mischungen verschiedener Initiatoren zu verwenden, beispielsweise Mischungen aus Wasserstoffperoxid und Natrium- oder Kaliumperoxodisulfat. Mischungen aus Wasserstoffperoxid und Natriumperoxodisulfat können in jedem beliebigen Verhältnis verwendet werden.

Besonders bevorzugte Initiatoren c) sind Azoinitiatoren, wie 2,2'-Azobis[2-(2-imidazolin-2-yl)propan]dihydrochiorid und 2,2'-Azobis[2-(5-methyl-2-imidazolin-2-yl)propan]dihydrochlorid, und Photoinitiatoren, wie 2-Hydroxy-2-methylpropiophenon und 1-[4-(2-Hydroxyethoxy)-phenyl]-2-hydroxy-2-methyl-1-propan-1-on, Redoxinitiatoren, wie Natriumpersulfat/ Hydroxymethylsulfinsäure, Ammoniumperoxodisulfat/Hydroxymethylsulfinsäure, Wasserstoffperoxid/Hydroxymethylsulfinsäure, Natriumpersulfat/Ascorbinsäure, Ammoniumperoxodisulfat/Ascorbinsäure und Wasserstoffperoxid/Ascorbinsäure, Photoinitiatoren, wie 1-[4-(2-Hydroxyethoxy)-phenyl]-2-hydroxy-2-methyl-1-propan-1-on, sowie deren Mischungen.

Die Initiatoren werden in üblichen Mengen eingesetzt, beispielsweise in Mengen von 0,001 bis 5 Gew.-%, vorzugsweise 0,01 bis 1 Gew.-%, bezogen auf die Monomeren a).

Die Polymerisationsinhibitoren können auch durch Absorption, beispielsweise an Aktivkohle, entfernt werden.

Der Feststoffgehalt der Monomerlösung beträgt vorzugsweise mindestens 35 Gew.-%, bevorzugt mindestens 38 Gew.-%, besonders bevorzugt mindestens 40 Gew.-%, ganz besonders bevorzugt mindestens 42 Gew.-%. Dabei ist der Feststoffgehalt die Summe aller nach der Polymerisation nichtflüchtigen Bestandteile. Dies sind Monomer a), Vernetzer b) und Initiator c).

Der Sauerstoffgehalt der Monomerlösung beträgt vorzugsweise mindestens 1 Gew.-ppm, besonders bevorzugt mindestens 2 Gew.-ppm, besonders bevorzugt mindestens 5 Gew.-ppm. Auf die übliche Inertisierung der Monomerlösung kann daher weitgehend verzichtet werden.

Der erhöhte Sauerstoffgehalt stabilisiert die Monomerlösung und ermöglicht die Verwendung geringerer Mengen an Polymerisationsinhibitor und vermindert damit die durch den Polymerisationsinhibitor verursachten Produktverfärbungen.

Die Monomerlösung wird zur Polymerisation in die Gasphase dosiert. Der Sauerstoffgehalt der Gasphase beträgt vorzugsweise 0,001 bis 0,15 Vol.-%, besonders bevorzugt 0,002 bis 0,1 Vol.-%, ganz besonders bevorzugt 0,005 bis 0,05 Vol.-%.

Die Gasphase enthält neben Sauerstoff vorzugsweise nur inerte Gase, d.h. Gase, die unter Reaktionsbedingungen nicht in die Polymerisation eingreifen, beispielsweise Stickstoff und/oder Wasserdampf.

Die Monomerlösung wird unter Ausbildung von Tropfen in die Gasphase dosiert. Die Tropfen können beispielsweise mittels einer Vertropferplatte erzeugt werden.

Eine Vertropferplatte ist eine Platte mit mindestens einer Bohrung, wobei die Flüssigkeit von oben durch die Bohrung tritt. Die Vertropferplatte bzw. die Flüssigkeit kann in Schwingungen versetzt werden, wodurch an der Unterseite der Vertropferplatte je Bohrung eine idealerweise monodisperse Tropfenkette erzeugt wird. In einer bevorzugten Ausführungsform wird die Vertropferplatte nicht angeregt.

Die Anzahl und die Größe der Bohrungen werden gemäß der gewünschten Kapazität und Tropfengröße ausgewählt. Der Tropfendurchmesser beträgt dabei üblicherweise das 1,9fache des Durchmessers der Bohrung. Wichtig ist hierbei, dass die zu vertropfende Flüssigkeit nicht zu schnell durch die Bohrung tritt bzw. der Druckverlust über die Bohrung nicht zu groß ist. Ansonsten wird die Flüssigkeit nicht vertropft, sondern der Flüssigkeitsstrahl wird infolge der hohen kinetischen Energie zerrissen (versprüht). Der Vertropfer wird im Strömungsbereich des laminaren Strahlzerfalls betrieben, d.h. die Reynoldszahl bezogen auf den Durchsatz pro Bohrung und den Bohrungsdurchmesser ist vorzugsweise kleiner als 2.000, bevorzugt kleiner 1.000, besonders bevorzugt kleiner 500, ganz besonders bevorzugt kleiner 100. Der Druckverlust über die Bohrung beträgt vorzugsweise weniger als 2,5 bar, besonders bevorzugt weniger als 1,5 bar, ganz besonders bevorzugt weniger als 1 bar.

Die Vertropferplatte weist üblicherweise mindestens eine, vorzugsweise mindestens 10, besonders bevorzugt mindestens 50, und üblicherweise bis zu 10.000, vorzugsweise bis zu 5.000, besonders bevorzugt bis zu 1.000, Bohrungen auf, wobei die Bohrungen üblicherweise gleichmäßig über die Vertropferplatte verteilt sind, vorzugsweise in der sogenannten Dreiecksteilung, d.h. jeweils drei Bohrungen bilden die Ecken eines gleichseitigen Dreiecks. Der Durchmesser der Bohrungen wird an die gewünschte Tropfengröße angepasst.

Die Tropfen können aber auch mittels pneumatischer Ziehdüsen, Rotation, Zerschneiden eines Strahls oder schnell ansteuerbarer Mikroventildüsen erzeugt werden.

In einer pneumatischen Ziehdüse wird ein Flüssigkeitsstrahl zusammen mit einem Gasstrom durch eine Blende beschleunigt. Über die Gasmenge kann der Durchmesser des Flüssigkeitsstrahls und damit der Tropfendurchmesser beeinflusst werden.

Bei der Tropfenerzeugung durch Rotation tritt die Flüssigkeit durch die Öffnungen einer rotierenden Scheibe. Durch die auf die Flüssigkeit wirkende Fliehkraft werden Tropfen definierter Größe abgerissen. Bevorzugte Vorrichtungen zur Rotationsvertropfung werden beispielsweise in DE 43 08 842 A1 beschrieben

Der austretende Flüssigkeitsstrahl kann aber auch mittels eines rotierenden Messers in definierte Segmente zerschnitten werden. Jedes Segment bildet anschließend einen Tropfen.

Bei Verwendung von Mikroventildüsen werden direkt Tropfen mit definiertem Flüssigkeitsvolumen erzeugt.

Die erzeugten Tropfen weisen einen mittleren Durchmesser von vorzugsweise mindestens 200 µm, besonders bevorzugt von mindestens 250 µm, ganz besonders bevorzugt von mindestens 300 µm, auf, wobei der Tropfendurchmesser durch Lichtstreuung bestimmt werden kann und den volumengemittelten mittleren Durchmesser bedeutet.

Der Polymerisationsreakor wird von einem Gas durchströmt. Dabei kann das Trägergas im Gleichstrom oder im Gegenstrom zu den frei fallenden Tropfen der Monomerlösung durch den Reaktionsraum geführt werden, bevorzugt im Gleichstrom, d.h. von oben nach unten. Vorzugsweise wird das Gas nach einem Durchgang zumindest teilweise, bevorzugt zu mindestens 50%, besonders bevorzugt zu mindestens 75%, als Kreisgas in den Reaktionsraum zurückgeführt. Üblicherweise wird eine Teilmenge des Trägergases nach jedem Durchgang ausgeschleust, vorzugsweise bis zu 10%, besonders bevorzugt bis zu 3%, ganz besonders bevorzugt bis zu 1 %.

Die Polymerisation wird vorzugsweise in einer laminaren Gasströmung durchgeführt. Eine laminare Gasströmung ist eine Gasströmung, bei der sich die einzelnen Schichten der Strömung nicht vermischen, sondern parallel bewegen. Ein Maß für die Strömungsverhältnisse ist die Reynolds-Zahl (Re). Unterhalb einer kritischen ReynoldsZahl (Reₖᵣᵢₜ) von 2300 ist die Gasströmung laminar. Die Reynolds-Zahl der laminaren Gasströmung beträgt vorzugsweise weniger als 2000, besonders bevorzugt weniger als 1500, ganz besonders bevorzugt weniger als 1000. Der untere Grenzfall der laminaren Inertgasströmung ist eine ruhende Inertgasatmosphäre (Re = 0), d.h., es wird nicht kontinuierlich Inertgas eingespeist.

Die Gasgeschwindigkeit wird vorzugsweise so eingestellt, dass die Strömung im Polymerisationsreaktor gerichtet ist, beispielsweise liegen keine der allgemeinen Strömungsrichtung entgegengesetzte Konvektionswirbel vor, und beträgt beispielsweise 0,01 bis 5 m/s, vorzugsweise 0,02 bis 4 m/s, besonders bevorzugt 0,05 bis 3 m/s, ganz besonders bevorzugt 0,1 bis 2 m/s.

Das den Reaktor durchströmende Gas wird vor dem Reaktor auf die Reaktionstemperatur vorgewärmt.

Die Reaktionstemperatur beträgt bei der thermisch induzierten Polymerisation vorzugsweise 70 bis 250°C, besonders bevorzugt 100 bis 220°C, ganz besonders bevorzugt 120 bis 200°C.

Die Reaktion kann im Überdruck oder im Unterdruck durchgeführt werden, ein Unterdruck von bis zu 100 mbar gegenüber dem Umgebungsdruck ist bevorzugt.

Das Reaktionsabgas, d.h. das der Reaktionsraum verlassende Gas, kann beispielsweise in einem Wärmeaustauscher abgekühlt werden. Dabei kondensieren Wasser und nicht umgesetztes Monomer a). Danach kann das Reaktionsabgas zumindest teilweise wieder aufgewärmt und als Kreisgas in den Reaktor zurückgeführt werden. Ein Teil des Reaktionsabgases kann ausgeschleust und durch frisches Gas ersetzt werden, wobei im Reaktionsabgas enthaltenes Wasser und nicht umgesetzte Monomere a) abgetrennt und rückgeführt werden können.

Besonders bevorzugt ist ein Wärmeverbund, dass heißt, ein Teil der Abwärme beim Abkühlen des Abgases wird zum Aufwärmen des Kreisgases verwendet.

Die Reaktoren können begleitbeheizt werden. Die Begleitheizung wird dabei so eingestellt, dass die Wandtemperatur mindestens 5°C oberhalb der Reaktorinnentemperatur liegt und die Kondensation an den Reaktorwänden zuverlässig vermieden wird.

Das Reaktionsprodukt kann dem Reaktor in üblicher Weise entnommen werden, vorzugsweise am Boden über eine Förderschnecke, und wahlweise bis zur gewünschten Restfeuchte und zum gewünschten Restmonomerengehalt getrocknet werden.

Das Reaktionsprodukt wird vorzugsweise in mindestens einer Wirbelschicht getrocknet.

Die Polymerpartikel können zur weiteren Verbesserung der Eigenschaften nachvernetzt werden.

Nachvernetzer sind Verbindungen, die mindestens zwei Gruppen enthalten, die mit den Carboxylatgruppen des Hydrogels kovalente Bindungen bilden können. Geeignete Verbindungen sind beispielsweise Alkoxysiliylverbindungen, Polyaziridine, Polyamine, Polyamidoamine, Di- oder Polyepoxide, wie in EP 83 022 A2, EP 543 303 A1 und EP 937 736 A2 beschrieben, di- oder polyfunktionelle Alkohole, wie in DE 33 14 019 A1, DE 35 23 617 A1 und EP 450 922 A2 beschrieben, oder ß-Hydroxyalkylamide, wie in DE 102 04 938 A1 und US 6,239,230 beschrieben.

Des weiteren sind in DE 40 20 780 C1 zyklische Karbonate, in DE 198 07 502 A1 2-Oxazolidon und dessen Derivate, wie 2-Hydroxyethyl-2-oxazolidon, in DE 198 07 992 C1 Bis- und Poly-2-oxazolidinone, in DE 198 54 573 A1 2-Oxotetrahydro-1,3-oxazin und dessen Derivate, in DE 198 54 574 A1 N-Acyl-2-Oxazolidone, in DE 102 04 937 A1 zyklische Harnstoffe, in DE 103 34 584 A1 bizyklische Amidacetale, in EP 1 199 327 A2 Oxetane und zyklische Harnstoffe und in WO 2003/31482 A1 Morpholin-2,3-dion und dessen Derivate als geeignete Nachvernetzer beschrieben.

Die Menge an Nachvernetzer beträgt vorzugsweise 0,01 bis 1 Gew.-%, besonders bevorzugt 0,05 bis 0,5 Gew.-%, ganz besonders bevorzugt 0,1 bis 0,2 Gew.-%, jeweils bezogen auf das Polymer.

Die Nachvernetzung wird üblicherweise so durchgeführt, dass eine Lösung des Nachvernetzers auf das Hydrogel oder die trockenen Polymerpartikel aufgesprüht wird. Im Anschluss an das Aufsprühen wird thermisch getrocknet, wobei die Nachvernetzungsreaktion sowohl vor als auch während der Trocknung stattfinden kann.

Das Aufsprühen einer Lösung des Vernetzers wird vorzugsweise in Mischern mit bewegten Mischwerkzeugen, wie Schneckenmischer, Paddelmischer, Scheibenmischer, Pflugscharmischer und Schaufelmischer, durchgeführt werden. Besonders bevorzugt sind Vertikalmischer, ganz besonders bevorzugt sind Pflugscharmischer und Schaufelmischer. Geeignete Mischer sind beispielsweise Lödige-Mischer, Bepex-Mischer, Nauta-Mischer, Processall-Mischer und Schugi-Mischer.

Die thermische Trocknung wird vorzugsweise in Kontakttrocknern, besonders bevorzugt Schaufeltrocknern, ganz besonders bevorzugt Scheibentrocknern, durchgeführt. Geeignete Trockner sind beispielsweise Bepex-Trockner und Nara-Trockner. Überdies können auch Wirbelschichttrockner eingesetzt werden.

Die Trocknung kann im Mischer selbst erfolgen, durch Beheizung des Mantels oder Einblasen von Warmluft. Ebenso geeignet ist ein nachgeschalteter Trockner, wie beispielsweise ein Hordentrockner, ein Drehrohrofen oder eine beheizbare Schnecke. Besonders vorteilhaft wird in einem Wirbelschichttrockner gemischt und getrocknet.

Bevorzugte Trocknungstemperaturen liegen im Bereich 170 bis 250°C, bevorzugt 180 bis 220°C, und besonders bevorzugt 190 bis 210°C. Die bevorzugte Verweilzeit bei dieser Temperatur im Reaktionsmischer oder Trockner beträgt vorzugsweise mindestens 10 Minuten, besonders bevorzugt mindestens 20 Minuten, ganz besonders bevorzugt mindestens 30 Minuten.

Das erfindungsgemäße Verfahren ermöglicht die Herstellung wasserabsorbierender Polymerpartikel mit gleichbleibender Qualität.

Die gemäß dem erfindungsgemäßen Verfahren erhältlichen wasserabsorbierenden Polymerpartikel weisen eine Zentrifugenretentionskapazität (CRC) von typischerweise mindestens 20 g/g, vorzugsweise mindestens 25 g/g, bevorzugt mindestens 30 g/g, besonders bevorzugt mindestens 32 g/g, ganz besonders bevorzugt mindestens 34 g/g, auf. Die Zentrifugenretentionskapazität (CRC) der wasserabsorbierenden Polymerpartikel beträgt üblicherweise weniger als 50 g/g.

Die gemäß dem erfindungsgemäßen Verfahren erhältlichen wasserabsorbierenden Polymerpartikel weisen einen Gehalt an Extrahierbaren von typischerweise weniger als 15 Gew.-%, vorzugsweise weniger als 10 Gew.-%, bevorzugt weniger als 5 Gew.-%, besonders bevorzugt weniger als 4 Gew.-%, ganz besonders bevorzugt weniger als 3 Gew.-%, auf.

Die gemäß dem erfindungsgemäßen Verfahren erhältlichen wasserabsorbierenden Polymerpartikel weisen einen Gehalt an Restmonomeren von typischerweise weniger als 15 Gew.-%, vorzugsweise weniger als 10 Gew.-%, bevorzugt weniger als 5 Gew.%, besonders bevorzugt weniger als 4 Gew.-%, ganz besonders bevorzugt weniger als 3 Gew.-%, auf.

Der mittlere Durchmesser der gemäß dem erfindungsgemäßen Verfahren erhältlichen wasserabsorbierenden Polymerpartikel beträgt vorzugsweise mindestens 200 µm, besonders bevorzugt von 250 bis 600 µm, ganz besonders von 300 bis 500 µm, wobei der Partikeldurchmesser durch Lichtstreuung bestimmt werden kann und den volumengemittelten mittleren Durchmesser bedeutet. 90% der Polymerpartikel weisen einen Durchmesser von vorzugsweise 100 bis 800 µm, besonders bevorzugt von 150 bis 700 µm, ganz besonders bevorzugt von 200 bis 600 µm, auf.

Die wasserabsorbierenden Polymerpartikel werden mittels der nachfolgend beschriebenen Testmethoden geprüft.

### Methoden:

### Zentrifugenretentionskapazität (CRC Centrifuge Retention Capacity)

Die Zentrifugenretentionskapazität der wasserabsorbierenden Polymerpartikel wird gemäß der von der EDANA (European Disposables and Nonwovens Association) empfohlenen Testmethode Nr. 441.2-02 "Centrifuge retention capacity" bestimmt.

### Absorption unter Druck (AUL0.3psi; Absorption Under Pressure)

Die Absorption unter Druck der wasserabsorbierenden Polymerpartikel werden gemäß der von der EDANA (European Disposables and Nonwovens Association) empfohlenen Testmethode Nr. 442.2-02 "Absorption under pressure" bestimmt.

### Wassergehalt

Der Wassergehalt der wasserabsorbierenden Polymerpartikel wurde über den Gewichtsverlust bei 120°C ermittelt.

Die EDANA-Testmethoden sind beispielsweise erhältlich bei der European Disposables and Nonwovens Association, Avenue Eugène Plasky 157, B-1030 Brüssel, Belgien.

### Beispiele:

### Beispiele 1 bis 3

14,3 kg Natriumacrylat (37,5 gew.-%ige Lösung in Wasser), 1,4 kg Acrylsäure und 350 g Wasser wurden mit 22 g 15-fach ethoxiliertem Trimethylolpropantriacrylat gemischt. Als Initiator wurde eine 3 gew.-%ige Lösung von 2,2'-Azobis[2-(2-imidazolin-2-yl)propan]dihydrochlorid in Wasser verwendet. Der Initiator wurde vor einem Vertropfer über einen statischen Mischer in die Monomerlösung dosiert. Die Vertropferplatte hatte 30 Bohrungen ä 200 µm. Das Verhältnis von Monomerlösung zu Initiatorlösung betrug 93,6 : 6,4. Die erhaltene Mischung wurde in einen erwärmten, mit Stickstoffatmosphäre gefüllten Vertropfungsturm vertropft (12m Höhe, 2m Breite, Gasgeschwindigkeit 0,1 m/s im Gleichstrom). Die Dosiergeschwindigkeit der Mischung betrug 16 bis 26 kg/h. Die Heizleistung der Gasvorwärmung wurde so geregelt, dass die Gaseingangstemperatur (Tₑᵢₙ) des Vertropfungsturms konstant 180°C betrug. Die eingespeiste Stickstoffmenge betrug 1.000 m³/h.

Die Versuchsergebnisse sind in der Tabelle 1 zusammengefasst.

### Beispiele 4 bis 6

14,3 kg Natriumacrylat (37,5 gew.-%ige Lösung in Wasser), 1,4 kg Acrylsäure und 350 g Wasser wurden mit 22 g 15-fach ethoxiliertem Trimethylolpropantriacrylat gemischt. Als Initiator wurde eine 3 gew.-%ige Lösung von 2,2'-Azobis[2-(2-imidazolin-2-yl)propan]dihydrochlorid in Wasser verwendet. Der Initiator wurde vor einem Vertropfer über einen statischen Mischer in die Monomerlösung dosiert. Die Vertropferplatte hatte 30 Bohrungen ä 200 µm. Das Verhältnis von Monomerlösung zu Initiatorlösung betrug 93,6 : 6,4. Die erhaltene Mischung wurde in einen erwärmten, mit Stickstoffatmosphäre gefüllten Vertropfungsturm vertropft (12m Höhe, 2m Breite, Gasgeschwindigkeit 0,1 m/s im Gleichstrom). Die Dosiergeschwindigkeit der Mischung betrug 16 bis 26 kg/h. Die Heizleistung der Gasvorwärmung wurde so geregelt, dass die Gasausgangstemperatur (Tₐᵤₛ) des Vertropfungsturms konstant 130°C betrug. Die eingespeiste Stickstoffmenge betrug 1.000 m³/h.

Die Versuchsergebnisse sind in der Tabelle 1 zusammengefasst.

**Tab. 1: Versuchsergebnisse**

| Beispiel | Dosiergeschwindigkeit [kg/h] | Tₑᵢₙ [°C] | Tₐᵤₛ [°C] | Wassergehalt [Gew.-%] | CRC [g/g] | AUL0.3psi [g/g] |
|---|---|---|---|---|---|---|
| 1^{*)} | 16 | 180 | 144 | 10 | 38,8 | 21,0 |
| 2^{*)} | 20 | 180 | 141 | 11 | 37,6 | 24,4 |
| 3^{*)} | 26 | 180 | 137 | 13 | 35,3 | 29,8 |
| 4 | 16 | 162 | 130 | 12 | 34,7 | 31,2 |
| 5 | 20 | 166 | 130 | 13 | 33,9 | 30,5 |
| 6 | 26 | 168 | 130 | 15 | 35,1 | 30,8 |

| | | | | | | |
|---|---|---|---|---|---|---|
| *) Vergleichsbeispiel | | | | | | |

Die Ergebnisse zeigen, dass Laständerungen bei gereglter Gaseingangstemperatur zu erheblichen Änderungen der Absorption unter Druck bei den erhaltenen Polymerpartikeln führen. Dieser unerwünschte Effekt verschwindet, wenn statt dessen die Gasausgangstemperatur geregelt wird.

## Patentansprüche

1. Verfahren zur Herstellung wasserabsorbierender Polymerpartikel, wobei Monomere enthaltende Tropfen erzeugt werden, die Tropfen
a) mindestens ein ethylenisch ungesättigtes Monomer,
b) mindestens einen Vernetzer,
c) mindestens einen Initiator und
d) Wasser,
enthalten, die Monomerlösung zur Polymerisation und unter Ausbildung von Tropfen in die Gasphase dosiert wird, die Monomeren in einer die Tropfen umgebenden erwärmten Gasphase polymerisiert werden und das Gas den Polymerisationsreaktor durchströmt, **dadurch gekennzeichnet, dass** das den Polymerisationsreaktor durchströmende Gas vor dem Eintritt in den Polymerisationsreaktor mittels geeigneter Wärmeaustauscher vorgewärmt und die Temperatur des den Polymerisationsreaktor verlassenden Gases über die Heizleistung geregelt wird.

2. Verfahren gemäß Anspruch 1, **dadurch gekennzeichnet, dass** das Gas den Polymerisationsreaktor von oben nach unten durchströmt.

3. Verfahren gemäß Ansprüche 1 oder 2, **dadurch gekennzeichnet, dass** die Tropfen einen mittleren Durchmesser von mindestens 200 µm aufweisen.

4. Verfahren gemäß einem der Ansprüche 1 bis 3, **dadurch gekennzeichnet, dass** das Monomer mindestens eine Säuregruppe aufweist.

5. Verfahren gemäß Anspruch 4, **dadurch gekennzeichnet, dass** die Säuregruppen des Monomeren zumindest teilweise neutralisiert sind.

6. Verfahren gemäß einem der Ansprüche 1 bis 5, **dadurch gekennzeichnet, dass** Monomer zu mindestens 50 mol-% Acrylsäure ist.

7. Verfahren gemäß einem der Ansprüche 1 bis 6, **dadurch gekennzeichnet, dass** die erhaltenen Polymerpartikel in mindestens einem weiteren Verfahrensschritt getrocknet werden.

8. Verfahren gemäß Anspruch 7, **dadurch gekennzeichnet, dass** die erhaltenen Polymerpartikel in mindestens einer Wirbelschicht getrocknet werden.

## Claims

1. A process for producing water-absorbing polymeric particles which comprises generating droplets comprising monomers, the droplets comprising
a) at least one ethylenically unsaturated monomer,
b) at least one crosslinker,
c) at least one initiator, and
d) water,
metering the monomer solution for the polymerization into the gas phase, with formation of droplets, polymerizing the monomers in a heated gas phase surrounding the droplets and flowing the gas through the polymerization reactor, wherein the gas flowing through the polymerization reactor is preheated by means of suitable heat exchangers before entry into the polymerization reactor and the temperature of the gas leaving the polymerization reactor is closed-loop controlled via the heating power.

2. The process according to claim 1 wherein the gas flows downwardly through the polymerization reactor.

3. The process according to claim 1 or 2 wherein the droplets have an average diameter of at least 200 µm.

4. The process according to any one of claims 1 to 3 wherein the monomer has at least one acid group.

5. The process according to claim 4 wherein the acid groups of the monomer are in an at least partly neutralized state.

6. The process according to any one of claims 1 to 5 wherein at least 50 mol% of the monomer is acrylic acid.

7. The process according to any one of claims 1 to 6 wherein the polymeric particles obtained are dried in at least one further process step.

8. The process according to claim 7 wherein the polymeric particles obtained are dried in at least one fluidized bed.

## Revendications

1. Procédé de fabrication de particules polymères absorbant l'eau, des gouttes contenant des monomères étant produites, les gouttes contenant
a) au moins un monomère à insaturation éthylénique,
b) au moins un agent de réticulation,
c) au moins un amorceur, et
d) de l'eau,
la solution de monomères étant, pour la polymérisation et avec formation de gouttes, dosée dans la phase gazeuse, les monomères étant polymérisés dans une phase gazeuse chauffée entourant les gouttes, et le gaz traversant le réacteur de polymérisation, **caractérisé en ce que** le gaz traversant le réacteur de polymérisation est, avant de pénétrer dans le réacteur de polymérisation, préchauffé à l'aide d'échangeurs de chaleur appropriés, et la température du gaz sortant du réacteur de polymérisation est régulée par l'intermédiaire de la puissance de chauffage.

2. Procédé selon la revendication 1, **caractérisé en ce que** le gaz traverse le réacteur de polymérisation de haut en bas.

3. Procédé selon la revendication 1 ou 2, **caractérisé en ce que** les gouttes présentent un diamètre moyen d'au moins 200 µm.

4. Procédé selon l'une des revendications 1 à 3, **caractérisé en ce que** le monomère présente au moins un groupe acide.

5. Procédé selon la revendication 4, **caractérisé en ce que** les groupes acides du monomère sont au moins partiellement neutralisés.

6. Procédé selon l'une des revendications 1 à 5, **caractérisé en ce que** le monomère est, à raison d'au moins 50 % en moles, l'acide acrylique.

7. Procédé selon l'une des revendications 1 à 6, **caractérisé en ce que** les particules polymères obtenues sont séchées dans au moins une autre étape du procédé.

8. Procédé selon la revendication 7, **caractérisé en ce que** les particules polymères obtenues sont séchées dans au moins un lit fluidisé.
